# EUROPEAN PATENT SPECIFICATION

(11) **EP 1 132 285 B1**
(45) Date of publication and mention of the grant of the patent: **17.05.2006**
(21) Application number: 01105290.9
(22) Date of filing: 05.03.2001
(51) Int. Cl.: B62M 3/04

(54) **Device for varying the length of pedal cranks, in particular for pedal vehicles**
Vorrichtung zur Änderung der Pedalarmlänge, insbesonere für Pedalfahrzeug
Dispositif permettant de modifier la longueur d'une manivelle de pédale notamment sur des véhicules à pédale

(30) Priority: 06.03.2000 IT TO000209
(43) Date of publication of application: 12.09.2001
(73) Proprietor: Dema S.R.L., 32028 Trichiana (BL) (IT)
(72) Inventor: Giustozzi, Ivano, 32028 Trichiana (IT)
(74) Representative: Dini, Roberto

(56) References cited:
- WO-A-94/26581
- WO-A-99/47410
- DE-C- 847 867
- GB-A- 2 152 172

## Description

The present invention relates to a device for continuously varying the length of pedal cranks, particularly of pedal vehicles.

The above devices are already known and employed in the field of pedal vehicles, in particular in the bicycles field, in order to ensure elongation of the pedal crank, i.e. the crank arm mounted on each pedal, when performing its down stroke during cycling: thus, a longer thrust crank arm is available right at the time a highest effort for the pedal-stroke is required.

A device as described above is disclosed in the German patent DE 847867 which discloses all the features of the preamble of independent claim 1, that relates to a device for varying the length of pedal cranks, the crank arm of each pedal crank comprising a movable element and a fixed element. The fixed element is rigidly connected to a hub, which is revolving with respect to a fixed shaft coaxially inserted in said hub. The movable element is apt to be moved with respect to the fixed element by means of levers, which connect said shaft to said movable element.

Another device as described above is disclosed in the international patent application WO 94/26581.

This document, to be consulted for further details, describes a device wherein each pedal crank comprises an outer element to which the pedal is fastened, and an inner element rigidly connected to a revolving body or hub, going through a fixed sleeve.

The outer element of the pedal crank is guided to slide on the relevant inner element by a linkage actuated by a shaft, which revolves coaxially inside the hub; means are provided between the hub, sleeve and shaft for transferring the hub rotation to the shaft for the latter to rotate around its own axis at a different speed from the hub rotation.

According to the solution described in WO 94/26581, the above means are obtained through a gearing system consisting of:
- a first gear rigidly connected to the shaft;
- a second and a third gear, rigidly coupled between them along one same rotary axis and eccentrically assembled in the hub with respect to the rotary axis of the latter;
- a crown wheel with inner toothing, rigidly connected to the sleeve.

The second gear is engaged to the first gear while the third gear engages the crown wheel, the numerical ratio of the teeth between the various gears and the crown wheel being such that the first gear can rotate around its own axis ad a speed twice the rotation of the hub associated to the pedal crank.

According to the solution disclosed in WO 94/26581, a pedal stroke generates a rotary motion of the pedal crank, i.e. of its inner and outer elements; since the inner element is connected to the hub, also the latter is forced to perform an identical rotation. Thus, being the second gear engaged to the crown wheel integral with the sleeve, it rotates around its own axis entraining also the third gear with the same rotation; this will also cause rotation of the first gear keyed to the shaft and force the latter to rotate.

Each shaft end is made integral with the end of a connecting rod, whose opposite end is pivoted to a relevant crank; also the opposite ends of the cranks are pivoted to the outer elements of the pedal cranks.

Thus, shaft rotation causes the angular movement of the above connecting rods and a consequent motion of the relevant cranks; as mentioned above, the cranks are pivoted to the outer elements of the pedal cranks, whereby the movement of the former causes the latter to slide with respect to the inner elements of the pedal cranks coupled to the hub.

As a result, a device ensuring extendable pedal cranks is obtained, with the outer element of the pedal crank extended to its maximum extent on the inner element when the pedal is starting its down stroke, i.e. with the crank arm taking its maximum length.

The main purpose of WO 94/26581 is to solve typical dimensional drawbacks of common devices previously known; in fact, significant advantages in this direction can be reached through the solution contained in the above document.

However, the present invention is based on the acknowledgement that the solution described in WO 94/26581 implies considerable overall dimensions as well as a significant mass and frictions, which prevent inserting the device gear unit inside a standard sleeve of a pedal vehicle; as a result, the use of the device disclosed by WO 94/26581 presumes e.g. an ad hoc execution of the bike frame, i.e. special adapting means for coupling the device gear unit to a standard frame.

It is the object of the present invention to solve these and other drawbacks related to the known state of the art, as it will become apparent in the following description; in this general frame, it is the object of the present invention to provide a device having an improved structure, a smaller size and mass, and lower manufacturing costs compared to the solution disclosed by the WO 94/26581.

In order to achieve such aims, it is the object of the present invention to provide a device for varying the length of pedal cranks, in particular for pedal vehicles, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows a plan view and partial section of the device according to the present invention;
- Fig. 2 shows an enlarged section view of a portion of the device represented in Fig. 1, for clarity's sake;

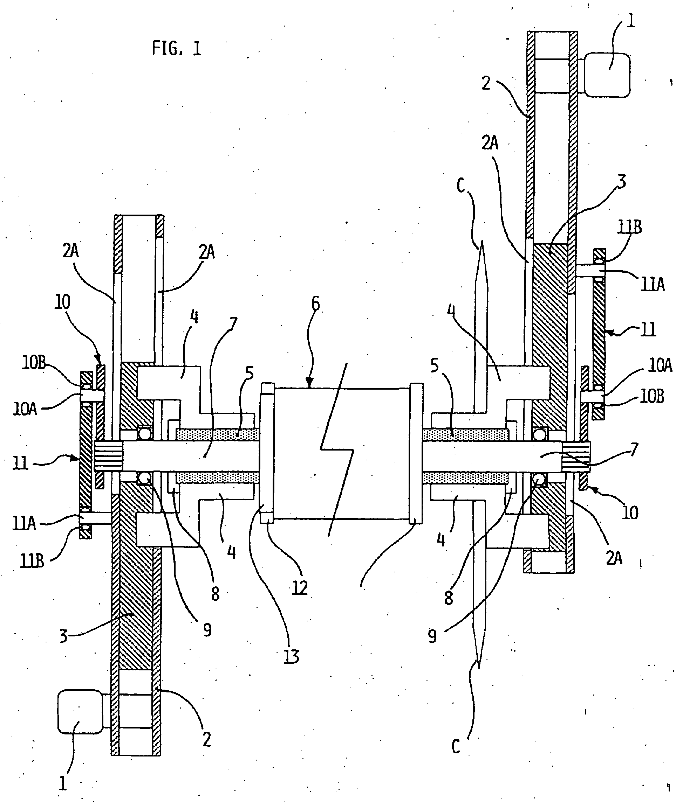

Referring to Fig. 1, reference 1 indicates two bushings, wherein the pedals associated to the device according to the present invention are to be fastened, omitted for simplicity's sake.

Each bushing 1 is integral to a relevant tubular element 2, apt to slide on an inner element 3; therefore, the set of each element 2 and 3 represents the actuating crank arm of each pedal or pedal crank, where the element 2 represents the outer element and element 3 represents the inner element.

It should be noticed how in the specific example of Fig. 1, the pedal crank on the right side is represented with its outer element 2 in its utmost extended condition on the relevant inner element 3; conversely, this condition matches a full backing of the outer element 2 of the left pedal crank on its relevant inner element 3.

Each inner element 2 is connected by common means, such as stirrups 4, to both ends of a hub or revolving body indicated in its whole with 5, which is mounted through a substantially cylindrical housing body 6.

According to the present invention, the housing body 6 may consist of the motion box of a bicycle, i.e. a typical frame sleeve of a bicycle, wherein bearings are housed according to the known state of the art for a shaft with associated pedal cranks to rotate.

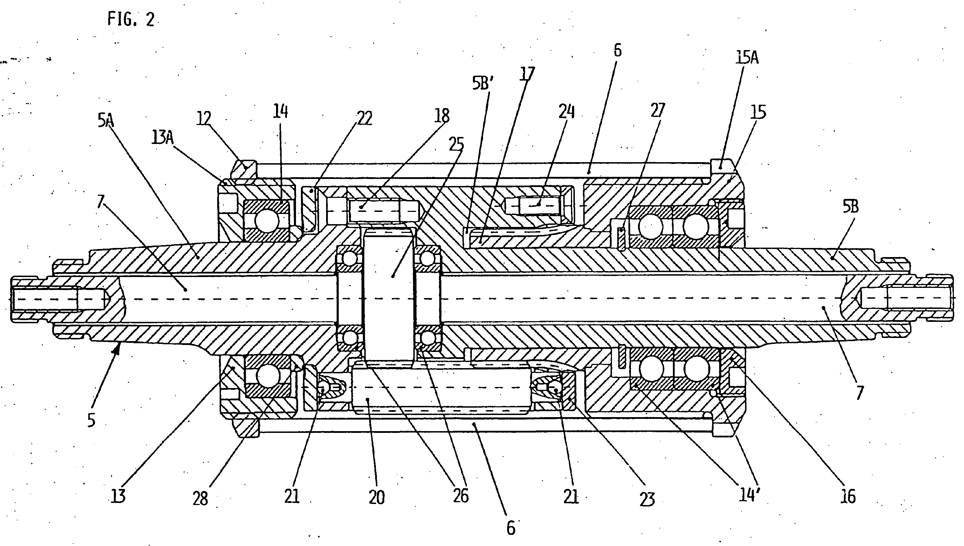

In the instance of Fig. 1, on the contrary, the housing body or sleeve 6 is used to house several components of the device according to the present invention, as further described and illustrated with reference to Fig. 2.

Reference C indicates a common crown fastened as known to one of the stirrups 4; this crown is provided to transmit through a chain, not represented in the figure, the motion produced by the pedals rotation to the rear wheel of the vehicle on which the device according to the invention is assembled.

Further referring to Fig. 1, reference 7 indicates a shaft inserted coaxially to the hub 5 without any interference in a through cavity of the latter; the shaft 7 protrudes out of both ends of the hub 5 on which protection bushings 8 are screwed; the shaft goes through these bushings 8 without interference.

The ends of the shaft 7 will then go through the inner elements 3 of the pedal cranks where they are supported by appropriate means, such as rolling bearings 9.

It should be noticed that the movement of the outer elements 2 with respect to the inner elements 3 is not hindered by the stirrups 4 and shaft 7 by virtue of the slits 2A delimited on the outer elements 2 of the pedal cranks.

Two first levers 10 equal to each other are rigidly coupled to the ends of the shaft 7; as illustrated in the figure, the levers 10 are parallel to each other; starting from the shaft 7 they extend to one same direction in one same angular position; it can be assumed, by way of example, to have both levers 10 directed to the front wheel of the pedal vehicle.

Each one of the first two levers 10 is pivoted, by means of a pin 10A and a rolling bearing 10B, to an end of a relevant second lever or 11; the other end of each one of the second levers 11 is pivoted, by means of a pin 11A and a rolling bearing 11B, to the outer element 2 of the pedal cranks.

As it can be noticed, the connection between the outer element 2 of each pedal crank and one end of the shaft 7 is apparently obtained through a connecting rod and crankshaft linkage, the connecting rod being represented by the lever 10 and the crankshaft by the lever 11.

However, as further described, the levers 10 are fixed and maintaining the same position at all times; vice-versa, the levers 11 are free to move angularly around the pin 10A due to the motion of the outer elements 2 of the pedal cranks.

Fig. 2 shows the components of the device according to the present invention, located inside the sleeve 6.

In this figure, reference 12 indicates a first ring nut screwed on a threading 13A delimited on the outer surface of a first bearing holder body 13; this bearing holder body 13 has a central through opening, which is apt to accommodate the hub 5 and is fastened in line with an appropriate rolling or ball bearing 14; thus, one end of the hub 5 will protrude out of the body 13 and be able to rotate with precision due to the presence of the bearing 14.

Reference 15A indicates a second ring nut directly delimited, i.e. integral to a second bearing holder body 15, which also has a central through opening apt to accommodate the hub 5; it should be noticed that a threading 15B is also delimited on the outer surface of the bearing holder body 15.

To the bearing holder body 15 are associated to two bearings 14' similar to the previous ones indicated with 14, operating on the hub 5; as it can be noticed, in this instance, the housing seat of the bearings 14' is directed outside the sleeve 6 and has an appropriate closing cover 16 with a central through opening for the hub 5.

Therefore, the other end of the hub 5 can protrude out of the central opening of the body 15 and out of the opening of the cover 16, with the hub 5 having being able to rotate with precision due to the presence of the bearings 14'.

Moreover, in line with the central passages of the bodies 13 and 15 sealing means operating on the hub 5 can be located, which may also be directly integrated in the bearings 14 and/or 14'.

Fig. 2 illustrates how the hub 5 is formed by two elements 5A and 5B fitted with respective axial cavities through which the shaft 7 goes through; the elements 5A and 5B have each one a substantially tubular portion ending outside the sleeve 6 and a flanged portion wholly contained inside the sleeve itself.

Reference 17 indicates a fixed gear rigidly coupled to the bearing holder body 15; as it can be noticed, the gear 17 has an axial cavity for the tubular portion of the element 5B of the hub 5 to go through without interference; additionally, Fig. 2 shows how the flanged portion of the element 5B delimits a throat 5B' wherein the gear 17 is housed without interferences.

Both elements 5A and 5B of the hub 5 are rigidly coupled to each other so as to rotate simultaneously; to this purpose, in the above example, the relevant flanged portions of the elements 5A and 5B are integral between them by means of suitable screws, one of them indicated with 18, forming one single rigid body.

In the flanged portion of the element 5B are delimited housing spaces for four equal satellite gears, one of them indicated with 20 in Fig. 2, both terminal portions of each one of said satellites 20 being inserted in appropriate open housings delimited in the elements 5A and 5B.

The ends of each satellite gear 20 are supported by relevant thrust balls 21, the latter being housed in relevant open seats delimited at the ends of the satellite gears themselves.

Therefore, the gears 20 are assembled in a planetary way with respect to the rotary axis of the hub 5 and arranged symmetrically with respect to the shaft 7.

References 22 and 23 indicate two covers with relevant central openings, fastened to the flanged portions of the elements 5A and 5B by common means, such as screws (one fastening screw of the cover 23 is indicated with 24), whose purpose is to close the above end seats of the satellite gears 20 in which are housing the balls 21.

Each satellite gear 20 is engaged on one side to the gear 17, which is a fixed one, being integral to the bearing holder body 15 and consequently to the sleeve 6; the other side of each satellite gear, on the contrary, is engaged to one same crown wheel 25 located between the elements 5A and 5B of the hub 5 and rigidly coupled to the shaft 7, e.g. by means of a small key (not shown). The gear 17 and crown wheel 25 are similar as to their diameter and number of teeth.

Substantially in line with the crown wheel 25, the elements 5A and 5B determine the housing seats for suitable rolling or ball bearings indicated with 26, which ensure a free rotation of the hub 5 with respect to the shaft 7.

Reference 27 indicates a safety metal ring fastened in a suitable seat on the tubular portion of the element 5B; the purpose of this ring is to prevent a possible extraction of the element 5B from the unit formed by the body 15 and gear 17.

Finally, reference 28 indicates a shim or spacer with a central through cavity not in contact with the hub 5, which during use is pressed between the bearing 14 and the cover 22.

As it can be noticed, the shaft 7 is inserted in the axial through cavities of the elements 5A and 5B of the hub 5, protruding out of the two ends of their relevant tubular portions.

As already cleared with reference to Fig. 1, the ends of the shaft 7 go through the inner portions 3 of the pedal cranks and are rigidly coupled to the levers 10; as said above, the levers 10 are pivoted on the ends of the relevant second levers 11; the other end of the latter being pivoted on the outer portions 2 of the pedal cranks.

Assembly of the device according to the present invention is as follows.

Both elements 5A and 5B with bearings 26 are inserted on both ends of the shaft 7, on which the crown wheel 25 has been preventively keyed, minding that the terminal portions of the four satellite gears 20 are inserted in the relevant housings delimited in the elements 5A and 5B themselves and that the satellite gears 20 engage the crown wheel 25.

Then both elements 5A and 5B are fastened to each other by the screws 18; the thrust balls 21 are placed in the end seats of the satellite gears 20 and to the flanged portions of the elements 5A and 5B are associated both covers 22 and 23, by means of their relevant screws.

The gear 17 is then made integral to the bearing holder body 15 and in the axial cavity of both elements is inserted the tubular portion of the element 5B of the hub 5, so as to have the gear 17 inserted in the throat 5B' and the satellite gears 20 engaged to the gear 17; now, to the same tubular portion of the element 5B will be associated the safety ring 27 and the bearings 14' as well as the relevant cover 16 fastened to the body 15.

The bearing holder body 15 with the hub 5 - shaft 7 unit is inserted and fastened into the sleeve 6; this is obtained screwing the threading 15B of the body 15 in a nut screw available inside the sleeve 6 (according to the common art, this nut screw is practically available in every sleeve), until the ring nut 15A strikes against the sleeve itself as also schematically illustrated in Fig. 1.

On the opposite side of the sleeve 6, also fitted with a usual nut screw, the bearing holder body 13 is then screwed with interposed the spacer 28, for accurate packing of the various inner components inside the sleeve itself; now, the ring nut 12 will be screwed to the threading 13A of the bearing holder body 13 in order to warrant a final safe closure of the gears unit.

Thereafter, both the stirrups 4 (one fitted with the crown C) and protection bushings 8 are commonly fastened to both ends of the hub 5; the inner elements 3 of the pedal cranks fitted with the bearings 9 are fastened to the stirrups 4 and the levers 10 are fastened to the shaft ends 7; the levers 11 are then fastened between the levers 10 and the outer elements 2 of the pedal cranks, as previously described.

The device according to the present invention operates as follows.

As usual, also in the case of the present invention the pedal stroke produces a rotary motion of each one of the two pedal cranks.

In the specific instance, the thrust exerted on the pedals, transferred by the user's feet to the outer elements 2, is converted in a rotary motion of the latter and, consequently, also of the inner elements 3 of the pedal cranks.

Since the inner elements 3 are rigidly coupled to the hub 5 by the stirrups 4, also the hub 5 is forced to rotate, causing a rotary motion also of the satellite gears 20. As a result, the satellite gears 20 will rotate simultaneously both on the gear 17 and crown wheel 25.

As mentioned above, the gear 17 is a fixed gear (being integral to the sleeve 6) and the diameter and number of teeth of the gear 17 is equal to the diameter and number of teeth of the crown wheel 25; consequently, the shaft 7 will remain fixed or static in spite of the hub rotation 5.

Therefore, also the levers 10 fastened to the shaft ends 7 remain still in the position illustrated in Fig. 1, oriented to the position ensuring maximum elongation of the right pedal crank. The levers 11, vice-versa, of which one end is integral to the outer elements 2 of the pedal cranks, are submitted to an angular movement around the fulcrum point represented by 10A in Fig. 1, following the movement of the pedal cranks themselves.

As it can be seen, the linkage of levers 10-11 is so conceived that, at the moment in which the right pedal crank takes substantially the same angular position of the lever 10, the relevant outer element 3 is extended at its utmost on its relevant inner element 2, i.e. the crank arm 2-3 has reached its utmost length; at this moment, conversely, the left pedal crank is in a specular position, and the linkage of levers 10-11 causes the relevant outer element 3 to take its utmost backward position on the relevant inner element 2, i.e. the crank arm 2-3 is at its shortest length.

Therefore, as it can be seen, since both levers 10 are fixed, parallel and oriented to one same direction with the same angular position, the device obtained allows to have pedal cranks of variable length, right with the aim of improving the thrust at the time of its highest effort, where a progressive continuous length variation of the pedal cranks ensures pedal stroke roundness.

From the above it is clear how operation of the device according to the present invention is performed with procedures other than the ones described in WO 94/26581, not suggested therein.

According to the present invention, it has been surprisingly ascertained that the shaft (7) coaxial to the hub (5) of the device can be easily maintained practically still or static in order to ensure sliding as desired of the outer elements of the pedal cranks on their relevant inner elements, providing anyway interacting gears between the hub and shaft.

Finally, it should be noticed that the device according to the invention ensures an easy adjustment of the system "working point", i.e. setting the angular position for obtaining a greater thrust arm 2-3, as desired.

It is clear, in fact, that a first user of a pedal vehicle may wish a maximum length of the crank arm 2-3 at the moment that the pedal crank itself is substantially parallel to the plane whereon the vehicle is moving; another user may wish this condition at the moment that the pedal crank starts its downwards stroke; a third user, on the contrary, may wish a maximum length of the pedal crank 2-3 at an intermediate location with respect the previous ones.

This capability of a different system adjustment and consequently its application to the varying users' requirements can be obtained in an extremely comfortable manner by the device according to the present invention during assembly, simply minding to have the levers 10 fastened to the shaft 7 in the angular position that allows the achievement of the maximum pedal crank length.

The solution according to the present invention ensures substantial advantages compared to the common technique previously mentioned.

A first essential result is represented by a considerable reduction of the overall dimensions of the device according to the invention compared to the previous common technique; in this respect it should be noticed that the maximum size of the bodies 13 and 15 in the areas where the relevant surface threading 13A and 15B are delimited is in the order of 38 millimeters, i.e. the device according to the invention can be easily inserted in the sleeve or motion box of a bicycle standard frame, typically with an outer diameter of about 56 millimeters.

Another advantage derives from the optimal distribution of the stress exerted on the teeth of the gears system, since such a stress is distributed over a plurality of satellite gears with respect to the sole satellite gear provided in WO 94/26581.

Since the satellite gears provided by the present invention have to support a minor stress, they may also have a smaller size; as a result, also the crown wheel 25 keyed to the shaft 7 will have smaller dimensions than provided in WO 94/26581.

Another significant technical result of the solution according to the present invention is due by the symmetrical configuration of the stress transferred from the hub 5 to the shaft 7, with a consequent suppression of the flexing moments both on the shaft 7 and hub 5.

From the above it is clear how according to the present invention the device core can be miniaturized, i.e. demagnified, also reducing its total mass, ensuring at the same time an optimal distribution or splitting of the mechanical stress generated by the hub rotation 5 on the shaft 7, frictions reduction and improved total performance.

As a result, also in view of an optimal stress distribution on the various satellite gears 20 as described above, the risk of failure and wear of the various components is considerably reduced in spite of its smaller size compared to the common art.

From the above description the features and advantages of the present invention are clear.

Therefore, it is obvious how the present invention will perfectly reach the intended aims, i.e. providing a device with an improved structure, reduced overall dimensions and mass, lower costs and a higher reliability compared to the known solution disclosed by WO 94/26581.

It is obvious that many changes are possible for the man skilled in the art to the device for varying the length of pedal cranks, particularly for pedal vehicles, described above by way of example, without departing from the novelty spirit of the innovative idea, and it is also clear that in practical actuation of the invention the components may often differ in form and size from the ones described and be replaced with technical equivalent elements.

A first possible implementation of the invention may relate to the number of satellite gears provided. In fact, the advantages mentioned herein for the invention compared to the common state of the art may also be obtained providing a different number of satellite gears 20 from the number described above by way of example.

Another possible implementation to the invention is to provide appropriate protecting means assembled on the pedal cranks in line with the areas where the linkage consisting of the levers 10-11 operates.

## Claims

1. A variable length pedal crank device comprising pedal cranks (2,3), in particular for pedal vehicles, the crank arm of each pedal crank comprising a movable element (2), to which the pedal (1) is fastened, and a fixed element (3), rigidly connected to a body (5) which is revolving with respect to a fixed body (15), where a shaft (7) goes coaxially through said revolving body (5), and said movable element (2) is guided to slide with respect to the fixed element (3) by levers (10,11) which connect said shaft (7) to said movable element (2), wherein means (17,20,25) operate between said revolving body (5), said shaft (7) and said fixed body (15) for maintaining said shaft (7) practically still or static with respect to said revolving body (5), in spite of the rotation of said revolving body (5),
**characterized in that**
said means (17, 20,25) comprise one or more first gears (20) associated to said revolving body (5), each one of said one or more first gears (20) being engaged to a second gear (25) coupled to said shaft (7).

2. A device according to claim 1, **characterized in that** said levers (10,11) comprise at least a first lever (10) and a second lever (11), pivoted to each other.

3. A device according to claim 2, **characterized in that** said first lever (10) is associated to said shaft (7), and is therefore in a fixed position during rotation of said revolving body (5).

4. A device according to claim 2, **characterized in that** said second lever (11) is pivoted to said movable element (2), and is therefore angularly movable following the movement of the relevant pedal crank.

5. A device according to claim 3, **characterized in that** the first levers (10) of each pedal crank, in the instance of two pedal cranks, are parallel to each other and they extend, starting from said shaft (7), to one same direction with one same angular position.

6. A device according to claim 5, **characterized in that** said first levers (10) are directed toward the front wheel of the vehicle on which the device is assembled.

7. A device according to claim 1, **characterized in that** said means (17,20,25) operate in order to distribute the mechanical stress discharged by said revolving body (5) on said shaft (7).

8. A device according to claim 1, **characterized in that** said first gears (20) are assembled in planetary way with respect to the rotating axis of said revolving body (5).

9. A device according to claim 1, **characterized in that** said first gears (20) are arranged symmetrically with respect to said shaft (7).

10. A device according to claim 1, **characterized in that** said first gears (20) comprise one or more satellite gears (20) with respect to said shaft (7), substantially equal to each other.

11. A device according to claim 10, **characterized in that** there are at least four of said satellite gears (20).

12. A device according to claim 10, **characterized in that** said second gear is a crown wheel (25) rigidly coupled to said shaft (7), to which said satellite gears (20) are engaged.

13. A device according to claim 1, **characterized in that** said means (17,20,25) comprise a third gear (17) integral to said fixed body (15).

14. A device according to claim 13, **characterized in that** said satellite gears (20) are engaged both to said second gear (25) and said third gear (17).

15. A device according to claim 14, **characterized in that** the diameter and number of teeth of said second gear (25) is equal to the diameter and number of teeth of said third gear (17).

16. A device according to claim 1, **characterized in that** said revolving body (5) is manufactured in at least two separate elements (5A,5B), coupled to each other.

17. A device according to claim 16, **characterized in that** said two separate elements (5A,5B) have respective housings for the end portions of said first gear (20).

18. A device according to at least one of the previous claims, **characterized in that** said revolving body (5) has a throat (5B') wherein at least a portion of said third gear (17) is inserted without interference.

19. A device according to at least one of the previous claims, **characterized in that** said fixed body (15) is apt to be fastened at least partially inside a housing body (6) which, in particular, belongs to the frame of the pedal vehicle whereon the device is assembled.

20. A device according to at least one of the previous claims, **characterized in that** said revolving body (5) is at least partially going through said fixed body (15) and the latter has a housing for at least a relevant rolling or ball bearing (14') operating between said revolving body (5) and said fixed body (15).

21. A device according to at least one of the previous claims, **characterized in that** said device provides a second fixed body (13), wherein said revolving body (5) goes through, said second fixed body (13) having a housing for at least a relevant rolling or ball bearing (14) operating between said revolving body (5) and said second fixed body (15).

22. A device according to claim 21, **characterized in that** said second fixed body (13) is apt to be fastened at least partially inside a housing body (6) which, in particular, belongs to the frame of the pedal vehicle whereon the device is assembled.

23. A device according to claim 22, **characterized in that** said housing body (6) is either a sleeve or motion box of a pedal vehicle whereon the device is assembled, in particular said sleeve or motion box having an outer diameter of about 56 millimeters.

24. A device according to at least one of the previous claims, **characterized in that** supporting means (9) of said shaft (7) are located outside with respect to said revolving body (5), in particular fastened to said fixed element (3).

25. A device according to at least one of the previous claims, **characterized in that** at least two rolling or ball bearings (26) operate between said shaft (7) and said revolving body (5)

## Patentansprüche

1. Pedalkurbelvorrichtung mit variabler Länge, insbesondere für pedalgetriebene Fahrzeuge, umfassend Pedalkurbeln (2,3), wobei der Kurbelarm von jeder Pedalkurbel ein bewegliches Element (2), an dem das Pedal (1) befestigt ist, und ein fixiertes Element (3), welches fest mit einem Revolverkörper (5) verbunden ist, der sich in Bezug auf einen fixierten Körper (15) dreht, umfasst, wobei eine Welle (7) axial durch den Revolverkörper (5) läuft und das bewegliche Element (2) mit Hebeln (10,11), welche die Welle (7) mit dem beweglichen Element (2) verbinden, geführt ist, um in Bezug auf das fixierte Element (3) zu gleiten, worin Mittel (17,20,25) zwischen dem Revolverkörper (5), der Welle (7) und dem fixierten Körper (15) arbeiten, um die Welle (7) praktisch ruhend oder statisch in Bezug auf den Revolverkörper (5) zu halten, anstatt der Rotation des Revolverkörpers (5),
**dadurch gekennzeichnet, dass** die Mittel (17,20,25) ein oder mehrere erste Getrieberäder (20) umfassen, welche dem Revolverkörper (5) zugeordnet sind, wobei jedes der einen oder mehreren Getrieberäder (20) mit einem zweiten Getrieberad (25) im Eingriff steht, welches mit der Welle (7) gekoppelt ist.

2. Vorrichtung nach Anspruch 1,
**dadurch gekennzeichnet, dass**, die Hebel (10,11) wenigstens einen ersten Hebel (10) und einen zweiten Hebel (11) umfassen, welche zueinander geführt sind.

3. Vorrichtung nach Anspruch 2,
**dadurch gekennzeichnet, dass** der erste Hebel (10) der Welle (7) zugeordnet ist und daher in einer fixierten Position während der Rotation des Revolverkörpers (5) ist.

4. Vorrichtung nach Anspruch 2,
**dadurch gekennzeichnet, dass** der zweite Hebel (11) an dem beweglichen Element (2) gelagert ist und daher winkelbeweglich der Bewegung des entsprechenden Pedalhebels folgt.

5. Vorrichtung nach Anspruch 3,
**dadurch gekennzeichnet, dass** die ersten Hebel (10) von jedem Pedalhebel, im Fall von zwei Pedalhebeln, parallel zueinander sind und dass sie sich, ausgehend von der Welle (7), in eine gleiche Richtung mit einer gleichen Winkelposition erstrecken.

6. Vorrichtung nach Anspruch 5,
**dadurch gekennzeichnet, dass** die ersten Hebel (10) in Richtung des Frontrads des Fahrzeugs gerichtet sind, an dem die Vorrichtung montiert ist.

7. Vorrichtung nach Anspruch 1,
**dadurch gekennzeichnet, dass** die Mittel (17,20,25) arbeiten, um die mechanische Spannung, welche durch den Revolverkörper (5) auf die Welle (7) entladen wird, zu verteilen.

8. Vorrichtung nach Anspruch 1,
**dadurch gekennzeichnet, dass** die ersten Getrieberäder (20) in Planetenanordnung in Bezug auf die rotierende Achse des Revolverkörpers (5) angeordnet sind.

9. Vorrichtung nach Anspruch 1,
**dadurch gekennzeichnet, dass** die ersten Getrieberäder (20) symmetrisch in Bezug auf die Welle (7) angeordnet sind.

10. Vorrichtung nach Anspruch 1,
**dadurch gekennzeichnet, dass** die ersten Getrieberäder (20) ein oder mehrere Satellitengetrieberäder (20) in Bezug auf die Welle (7) umfassen, im Wesentlichen gleich zueinander.

11. Vorrichtung nach Anspruch 10,
**dadurch gekennzeichnet, dass** wenigstens vier Satellitengetrieberäder (20) vorhanden sind.

12. Vorrichtung nach Anspruch 10,
**dadurch gekennzeichnet, dass** das zweite Getrieberad ein Kronrad (25) ist, welches fest mit der Welle gekoppelt ist, mit dem die Satellitengetrieberäder (20) im Eingriff sind.

13. Vorrichtung nach Anspruch 1,
**dadurch gekennzeichnet, dass** die Mittel (17,20,25) ein drittes Getrieberad (17) umfassen, welches integral am fixierten Körper (15) ausgebildet ist.

14. Vorrichtung nach Anspruch 13,
**dadurch gekennzeichnet, dass** die Satellitengetrieberäder (20) beide mit dem zweiten Getrieberad (25) und dem dritten Getrieberad (17) im Eingriff sind.

15. Vorrichtung nach Anspruch 14,
**dadurch gekennzeichnet, dass** der Durchmesser und die Anzahl der Zähne des zweiten Getrieberads (25) gleich ist mit dem Durchmesser und der Anzahl der Zähne des dritten Getrieberads (17).

16. Vorrichtung nach Anspruch 1,
**dadurch gekennzeichnet, dass** der Revolverkörper (5) in wenigstens zwei separaten Elementen (5a,5b) hergestellt ist, die miteinander gekoppelt sind.

17. Vorrichtung nach Anspruch 16,
**dadurch gekennzeichnet, dass** zwei separate Elemente (5a,5b) entsprechende Gehäuse für die Endabschnitte des ersten Getrieberads (20) aufweisen.

18. Vorrichtung nach wenigstens einem der vorhergehenden Ansprüche,
**dadurch gekennzeichnet, dass** der Revolverkörper (5) einen Hals (5b') hat, wobei wenigstens ein Abschnitt des dritten Getrieberads (17) ohne Übermaß eingesetzt ist.

19. Vorrichtung nach wenigstens einem der vorhergehenden Ansprüche,
**dadurch gekennzeichnet, dass** der fixierte Körper (15) ausgebildet ist, um wenigstens teilweise innerhalb eines Gehäusekörpers (6) befestigt zu werden, welches insbesondere zu dem Rahmen des pedalgetriebenen Fahrzeugs gehört, an dem die Vorrichtung montiert ist.

20. Vorrichtung nach wenigstens einem der vorhergehenden Ansprüche,
**dadurch gekennzeichnet, dass** der Revolverkörper (5) wenigstens teilweise durch den fixierten Körper (15) läuft und der letztere ein Gehäuse hat für wenigstens ein entsprechendes Rollen- oder Kugellager (14'), welches zwischen dem Revolverkörper (5) und dem fixierten Körper (15) arbeitet.

21. Vorrichtung nach wenigstens einem der vorhergehenden Ansprüche,
**dadurch gekennzeichnet, dass** die Vorrichtung einen zweiten fixierten Körper (13) aufweist, wobei der Revolverkörper (5) durch den zweiten fixierten Körper (13) läuft, der ein Gehäuse für wenigstens ein entsprechendes Rollen- oder Kugellager (14) hat, welches zwischen dem Revolverkörper (5) und dem fixierten Körper (15) arbeitet.

22. Vorrichtung nach Anspruch 21,
**dadurch gekennzeichnet, dass** der zweite fixierte Körper (13) ausgebildet ist, um wenigstens teilweise innerhalb eines Gehäusekörpers (6) befestigt zu werden, welcher insbesondere zu dem Rahmen des pedalgetriebenen Fahrzeugs gehört, an dem die Vorrichtung montiert ist.

23. Vorrichtung nach Anspruch 22,
**dadurch gekennzeichnet, dass** der Gehäusekörper (6) entweder eine Hülse oder ein Antriebsgehäuse eines Pedalfahrzeugs ist, an dem die Vorrichtung montiert ist, wobei die Hülse oder das Antriebsgehäuse insbesondere einen äußeren Durchmesser von etwa 56mm aufweist.

24. Vorrichtung nach wenigstens einem der vorhergehenden Ansprüche,
**dadurch gekennzeichnet, dass** Stützmittel (9) der Welle (7) außerhalb in Bezug auf den Revolverkörper (5) angeordnet sind, insbesondere befestigt an dem fixierten Element (3).

25. Vorrichtung nach wenigstens einem der vorhergehenden Ansprüche,
**dadurch gekennzeichnet, dass** wenigstens zwei Rollen- oder Kugellager (26) zwischen der Welle (7) und dem Revolverkörper (5) arbeiten.

## Revendications

1. Dispositif à manivelle de pédalier de longueur variable comprenant des manivelles de pédalier (2, 3), en particulier pour véhicules à pédales, le bras de manivelle de chaque manivelle de pédalier comportant un élément mobile (2) auquel est fixée la pédale (1), et un élément fixe (3) connecté de façon rigide à un corps (5) qui tourne par rapport à un corps fixe (15), où une tige (7) passe de façon coaxiale à travers ledit corps tournant (5), et ledit élément mobile (2) est guidé pour coulisser par rapport à l'élément fixe (3) par des leviers (10, 11) qui connectent ladite tige (7) audit élément mobile (2), où des moyens (17, 20, 25) fonctionnent entre ledit corps tournant (5), ladite tige (7) et ledit corps fixe (15) pour maintenir ladite tige (7) pratiquement immobile ou statique par rapport audit corps tournant (5) malgré la rotation dudit corps tournant (5),
**caractérisé en ce que** lesdits moyens (17, 20, 25) comprennent un ou plusieurs premiers engrenages (20) associés audit corps tournant (5), chacun desdits un ou plusieurs premiers engrenages (20) étant en prise avec un second engrenage (25) couplé à ladite tige (7).

2. Dispositif selon la revendication 1, **caractérisé en ce que** lesdits leviers (10, 11) comprennent au moins un premier levier (10) et un second levier (11) en pivotement l'un par rapport à l'autre.

3. Dispositif selon la revendication 2, **caractérisé en ce que** ledit premier levier (10) est associé à ladite tige (7), et se trouve par conséquent dans une position fixe lors de la rotation dudit corps tournant (5).

4. Dispositif selon la revendication 2, **caractérisé en ce que** ledit second levier (11) est pivoté par rapport audit élément mobile (2), et peut par conséquent effectuer un déplacement angulaire en suivant le mouvement de la manivelle de pédalier appropriée.

5. Dispositif selon la revendication 3, **caractérisé en ce que** lesdits premiers leviers (10) de chaque manivelle de pédalier, dans le cas de deux manivelles de pédalier, sont parallèles l'un à l'autre et s'étendent, en partant de ladite tige (7), dans une même direction avec une même position angulaire.

6. Dispositif selon la revendication 5, **caractérisé en ce que** lesdits premiers leviers (10) sont dirigés vers la roue avant du véhicule sur lequel le dispositif est assemblé.

7. Dispositif selon la revendication 1, **caractérisé en ce que** lesdits moyens (17, 20, 25) fonctionnent pour répartir la contrainte mécanique déchargée par ledit corps tournant (5) sur ladite tige (7).

8. Dispositif selon la revendication 1, **caractérisé en ce que** lesdits premiers engrenages (20) sont assemblés de façon planétaire par rapport à l'axe de rotation dudit corps tournant (5).

9. Dispositif selon la revendication 1, **caractérisé en ce que** lesdits premiers engrenages (20) sont disposés symétriquement par rapport à ladite tige (7).

10. Dispositif selon la revendication 1, **caractérisé en ce que** lesdits premiers engrenages (20) comprennent un ou plusieurs pignons satellites (20) par rapport à ladite tige (7), essentiellement égaux les uns aux autres.

11. Dispositif selon la revendication 10, **caractérisé en ce qu'**il existe au moins quatre desdits pignons satellites (20).

12. Dispositif selon la revendication 10, **caractérisé en ce que** ledit second engrenage est une couronne d'entraînement (25) couplée de façon rigide à ladite tige (7), dans laquelle lesdits pignons satellites (20) sont en prise.

13. Dispositif selon la revendication 1, **caractérisé en ce que** lesdits moyens (17, 20, 25) comprennent un troisième engrenage (17) d'un seul tenant avec ledit corps fixe (15).

14. Dispositif selon la revendication 13, **caractérisé en ce que** lesdits pignons satellites (20) sont en prise à la fois avec ledit second engrenage (25) et avec ledit troisième engrenage (17).

15. Dispositif selon la revendication 14, **caractérisé en ce que** le diamètre et le nombre de dents dudit second engrenage (25) sont égaux au diamètre et au nombre de dents dudit troisième engrenage (17).

16. Dispositif selon la revendication 1, **caractérisé en ce que** ledit corps tournant (5) est fabriqué en au moins deux éléments séparés (5A, 5B), couplés l'un à l'autre.

17. Dispositif selon la revendication 16, **caractérisé en ce que** lesdits deux éléments séparés (5A, 5B) ont des logements respectifs pour les portions d'extrémité dudit premier engrenage (20).

18. Dispositif selon au moins l'une des revendications précédentes, **caractérisé en ce que** ledit corps tournant (5) a une gorge (5B') dans laquelle au moins une portion dudit troisième engrenage (17) est insérée sans interférence.

19. Dispositif selon au moins l'une des revendications précédentes, **caractérisé en ce que** ledit corps fixe (15) est apte à être fixé au moins partiellement à l'intérieur d'un corps de logement (6) qui, en particulier, appartient au cadre du véhicule à pédales sur lequel le dispositif est assemblé.

20. Dispositif selon au moins l'une des revendications précédentes, **caractérisé en ce que** ledit corps tournant (5) passe au moins partiellement par ledit corps fixe (15) et **en ce que** ce dernier a un logement pour au moins un roulement ou roulement à billes (14') approprié fonctionnant entre ledit corps tournant (5) et ledit corps fixe (15).

21. Dispositif selon au moins l'une des revendications précédentes, **caractérisé en ce que** ledit dispositif fournit un second corps fixe (13), que ledit corps tournant (5) traverse, ledit second corps fixe (13) présentant un logement pour au moins un roulement ou roulement à billes (14) approprié, fonctionnant entre ledit corps tournant (5) et ledit second corps fixe (15).

22. Dispositif selon la revendication 21, **caractérisé en ce que** ledit second corps fixe (13) est apte à être fixé au moins partiellement à l'intérieur d'un corps de logement (6) qui en particulier appartient au cadre du véhicule à pédales sur lequel le dispositif est assemblé.

23. Dispositif selon la revendication 22, **caractérisé en ce que** ledit corps de logement (6) est un manchon ou une boîte de mouvement d'un véhicule à pédales sur lequel le dispositif est assemblé, en particulier ledit manchon ou ladite boîte de mouvement ayant un diamètre externe d'environ 56 millimètres.

24. Dispositif selon au moins l'une des revendications précédentes, **caractérisé en ce que** des moyens de support (9) de ladite tige (7) sont situés à l'extérieur par rapport audit corps tournant (5), en particulier fixés audit élément fixe (3).

25. Dispositif selon au moins l'une des revendications précédentes, **caractérisé en ce qu'**au moins deux roulements ou roulements à billes (26) fonctionnent entre ladite tige (7) et ledit corps tournant (5).
